# EUROPEAN PATENT SPECIFICATION

(11) **EP 1 806 735 B1**
(45) Date of publication and mention of the grant of the patent: **06.04.2011**
(21) Application number: 07100303.2
(22) Date of filing: 09.01.2007
(51) Int. Cl.: G10L 15/26, G10L 15/28

(54) **System and method for performing distributed speech recognition**
System und Verfahren zum Ausführen einer verteilten Spracherkennung
Système et procédé pour éffectuer une reconaissance répartie de la parole

(30) Priority: 09.01.2006 US 757356 P; 08.01.2007 US 651149 P
(43) Date of publication of application: 11.07.2007
(73) Proprietor: Intellisist, Inc., Bellevue, WA 98004 (US)
(72) Inventor: Odinak, Gilad, Bellevue, WA 98008 (US)
(74) Representative: Curley, Donnacha John

(56) References cited:
- US-A1- 2002 133 337
- WEIQI ZHANG ET AL: "The study on distributed speech recognition system" ACOUSTICS, SPEECH, AND SIGNAL PROCESSING, 2000. ICASSP '00. PROCEEDINGS. 2000 IEEE INTERNATIONAL CONFERENCE ON 5-9 JUNE 2000, PISCATAWAY, NJ, USA,IEEE, vol. 3, 5 June 2000 (2000-06-05), pages 1431-1434, XP010507618 ISBN: 0-7803-6293-4
- QIRU ZHOU1AND SERGEY KOSENKO2 1 DIALOGUE SYSTEMS RESEARCH DEPARTMENT 2 LUCENT SPEECH SOLUTIONS BELL LABS ET AL: "Lucent Automatic Speech Recognition: A Speech Recognition Engine for Internet and Telephony Service Applications" ICSLP 2000, 16 October 2000 (2000-10-16), pages 1-4, XP007010755

## Description

### TECHNICAL FIELD

The invention relates in general to speech recognition and, specifically, to a system and method for performing distributed speech recognition.

### BACKGROUND ART

Customer call centers, or simply, "call centers," are often the first point of contact for customers seeking direct assistance from manufacturers and service vendors. Call centers are reachable by telephone, including data network-based telephone services, such as Voice-Over-Internet (VoIP), and provide customer support and problem resolution. Although World Wide Web- and email-based customer support are becoming increasingly available, call centers still offer a convenient and universally-accessible forum for remote customer assistance.

The timeliness and quality of service provided by call centers is critical to ensuring customer satisfaction, particularly where caller responses are generated through automation. Generally, the expectation level of callers is lower when they are aware that an automated system, rather than a live human agent, is providing assistance. However, customers become less tolerant of delays, particularly when the delays occur before every automated system-generated response. Minimizing delays is crucial, even when caller volume is high.

Automated call processing requires on-the-fly speech recognition. Parts of speech are matched against a stored grammar that represents the automated system's "vocabulary." Spoken words and phrases are identified from which the caller's needs are determined, which can require obtaining further information from the caller, routing the call, or playing information to the caller in audio form.

Accurate speech recognition hinges on a rich grammar embodying a large vocabulary. However, a rich grammar, particularly when provided in multiple languages, creates a large search space and machine latency can increase exponentially as the size of a grammar grows. Consequently, the time required to generate an automated response will also increase. Conventional approaches to minimizing automated system response delays compromise quality over speed.

U.S. Patent Publication 2005/0002502 to Cloren, published January 6, 2005, discloses an apparatus and method for processing service interactions. An interactive voice and data response system uses a combination of human agents, advanced speech recognition, and expert systems to intelligently respond to customer inputs. Customer utterances or text are interpreted through speech recognition and human intelligence. Human agents are involved only intermittently during the course of a customer call to free individual agents from being tied up for the entire call duration. Multiple agents could be used in tandem to check customer intent and input data and the number of agents assigned to each component of customer interaction can be dynamically adjusted to balance workload. However, to accommodate significant end-user traffic, the Cloren system trades off speech recognition accuracy against agent availability and system performance progressively decays under increased caller volume.

Therefore, there is a need for providing speech recognition for an automated call center that minimizes caller response delays and ensures consistent quality and accuracy independent of caller volume. Preferably, such an approach would use tiered control structures to provide distributed voice recognition and decreased latency times while minimizing the roles of interactive human agents.

The architecture of a further distributed speech recognition system is disclosed in WEIQI ZHANG ET AL:

"The study on distributed speech recognition system" ACOUSTICS, SPEECH, AND SIGNAL PROCESSING, 2000. ICASSP '00, pages 1431-1434, XP010507618.

The object of the present invention is solved by the appended claims.

### DISCLOSURE OF THE INVENTION

A system and method includes a centralized message server, a main speech recognizer, and one or more secondary speech recognizers. Additional levels of speech recognition servers are possible. The message server initiates a session with the main speech recognizer, which initiates a session with each of the secondary speech recognizers for each call received through a telephony interface. The main speech recognizer stores and forwards streamed audio data to each of the secondary speech recognizers and a secondary grammar reference that identifies a non-overlapping grammar section that is assigned to each respective secondary speech recognizer by the message server. Each secondary speech recognizer performs speech recognition on the streamed audio data against the assigned secondary grammar to generate secondary search results, which are sent to the main speech recognizer for incorporation into a new grammar that is generated using a main grammar template provided by the message server. The main speech recognizer performs speech recognition on the stored streamed audio data to generate a set of search results, which are sent to the message server. The main speech recognizer employs a form of an *n*-best algorithm, which chooses the *n* most-likely search results from each of the secondary search results to build the new grammar.

One embodiment provides a system and method for performing distributed speech recognition. Parts of speech in electronically-stored spoken data are identified against a plurality of stored speech grammars to provide one set of raw speech recognition results for each of the stored speech grammars. A limited number of each set of raw speech recognition results are designated as selected speech recognition results. The selected speech recognition results are assembled into a combined stored speech grammar. The same parts of speech in the spoken data are identified against the combined stored speech grammar to provide net speech recognition results.

Still other embodiments will become readily apparent to those skilled in the art from the following detailed description, wherein are described embodiments of the invention by way of illustrating the best mode contemplated for carrying out the invention. As will be realized, the invention is capable of other and different embodiments and its several details are capable of modifications in various obvious respects, all without departing from the spirit and the scope of the present invention. Accordingly, the drawings and detailed description are to be regarded as illustrative in nature and not as restrictive.

### DESCRIPTION OF THE DRAWINGS

FIGURE 1 is a block diagram showing a system for performing distributed speech recognition, in accordance with one embodiment.
FIGURE 2 is a data flow diagram showing grammar and search result distribution in the system of FIGURE 1.
FIGURES 3 and 4 are flow diagrams respectively showing a method for performing distributed speech recognition using a main recognizer and a secondary recognizer, in accordance with one embodiment.
FIGURES 5 and 6 are functional block diagrams respectively showing a main recognizer and a secondary recognizer for use in the system of FIGURE 1.

### BEST MODE FOR CARRYING OUT THE INVENTION

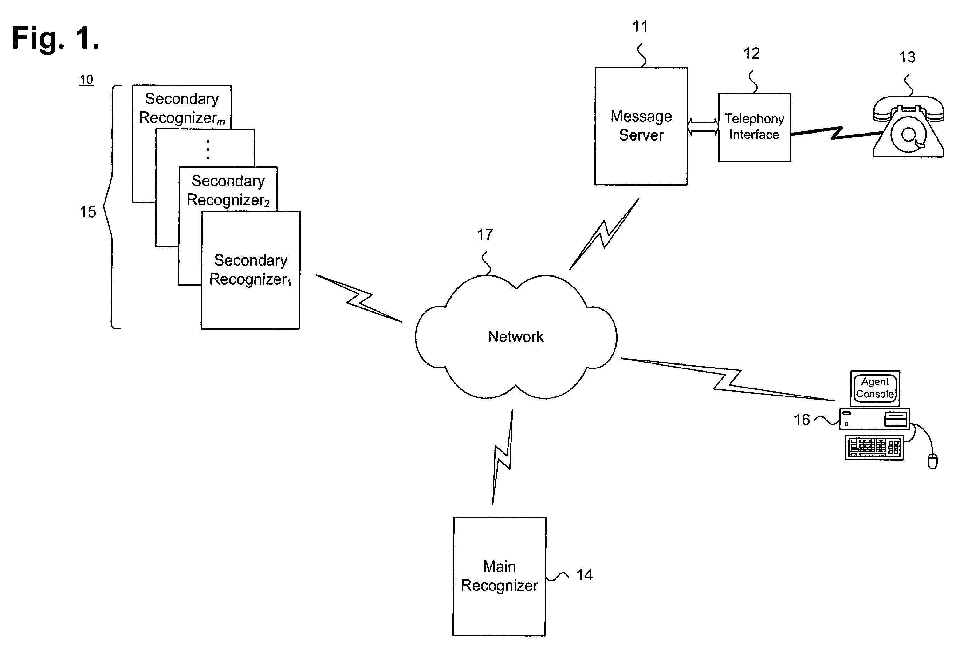

Call center processing is performed by delegating individualized speech recognition tasks over a plurality of hierarchically-structured speech recognizers. FIGURE 1 is a block diagram showing a system 10 for performing distributed speech recognition, in accordance with one embodiment. A message server 11 provides a message-based communications infrastructure for automated call center operation, such as described in commonly-assigned U.S. Patent Publication No. 2003/0177009 to Odinak et al., published September 18, 2003. During regular operation, the message system 11 executes multiple threads to process multiple simultaneous calls, which are handled by agents executing agent applications on agent consoles 16.

Customer calls are received through a telephony interface 12, which is operatively coupled to the message server 11 to provide access to a telephone voice and data network 13. In one embodiment, the telephony interface connects to the telephone network 13 over a T-1 carrier line, which can provide up to 24 individual channels of voice or data traffic provided at 64 kilobits (Kbits) per second. Other types of telephone network connections are possible.

The system 10 is architected into two or more tiers of speech recognizers. In one embodiment, a main recognizer 14 and one or more secondary recognizers 15 are organized into two tiers. The main recognizer 14 and secondary recognizers 15 are interconnected to the message server 11 over a network infrastructure 17, such as the Internet or a non-public enterprise data network. The network infrastructure 17 can be either wired or wireless and, in one embodiment, is implemented based on the Transmission Control Protocol/Internet Protocol (TCP/IP) network communications specification, although other types or combinations of networking implementations are possible. Similarly, other network topologies and arrangements are possible.

The main recognizer 14 interfaces directly to the message server 11 and to each of the secondary recognizers 15 as a top-level or root tier of a speech recognition hierarchy. Each of the secondary recognizers 15 are interfaced directly to the main recognizer 14 as a second level or tier of the speech recognition hierarchy. Further levels or tiers of tertiary recognizers, quaternary recognizers, and so forth, are possible.

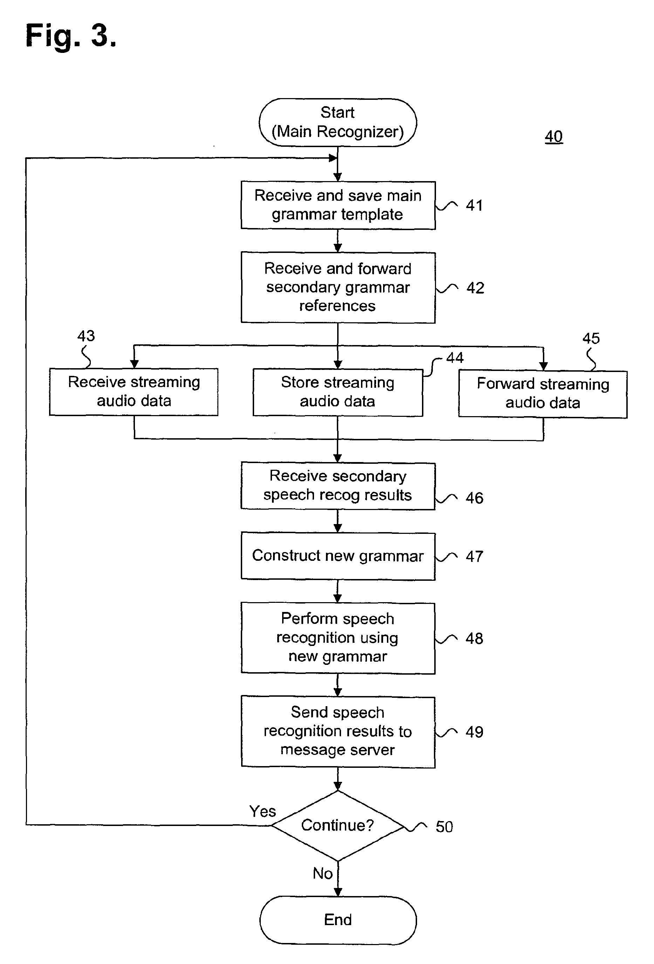

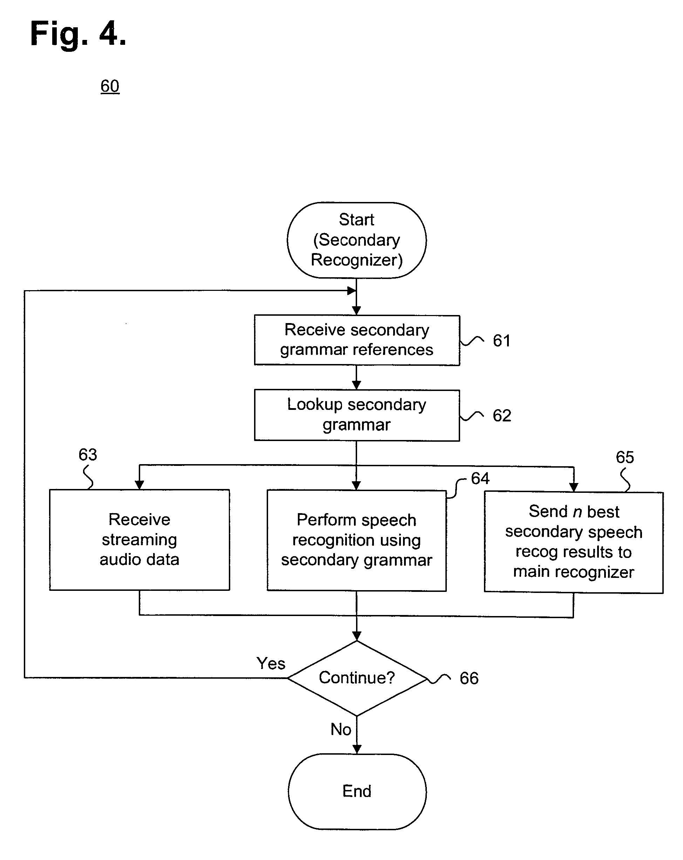

The message server 11 sends streamed audio data for each call to the main recognizer 14 and secondary recognizers 15, which then perform distributed speech recognition, as further described below with reference to FIGURES 3 and 4. Briefly, the message server 11 assigns grammar generation and speech recognition to the main recognizer 14 and delegates secondary speech recognition to the secondary recognizers 15, which each reference non-overlapping sections of a main grammar. In a further embodiment, each secondary recognizer 15 could be assigned independent grammars, such as language-specific grammars. Secondary speech recognition search results identified by the secondary recognizers 15 are used by the main recognizer 14 to generate a new grammar, from which a final set of speech recognition search results are identified and sent to the message server 11.

Operationally, upon startup, the telephony gateway 12 opens a T-1 carrier device channel for each available T-1 time slot. The telephony gateway 12 initiates a new connection to the message server 11, one connection per T-1 device channel, and the message server 11, in turn, initiates a corresponding new connection to the main recognizer 14. Finally, for each open T-1 I device channel, the main recognizer 14 initiates a new connection to each of the secondary recognizers 15. The number of secondary recognizers 15 is independent from the number T-1 device channels.

The separate telephony gateway-to-message server, message server-to-main recognizer, and main recognizer-to-secondary recognizer connections form one concurrent session apiece. When a customer call is answered or connected, the telephony gateway 11 sends a call message to the message server 11. The message server 11 then sends a new call message to the main recognizer 14, which starts a new speech recognition session. The main recognizer 14 sends a new call message to each of the secondary recognizers 15, which also start new speech recognition sessions. Thus, given *n* secondary recognizers 15, *n* + 1 concurrent speech recognition sessions are used for each call.

Each component, including the message server 11, main recognizer 14, and secondary recognizers 15, is implemented as a computer program, procedure or module written as source code in a conventional programming language, such as the C++ programming language, and presented for execution by a computer system as object or byte code. Alternatively, the components could be directly implemented in hardware, either as integrated circuitry or burned into read-only memory components. The various implementations of the source code and object and byte codes can be held on a computer-readable storage medium or embodied on a transmission medium in a carrier wave. The system 10 operates in accordance with a sequence of process steps, as further described below with reference to FIGURES 3 and 4.

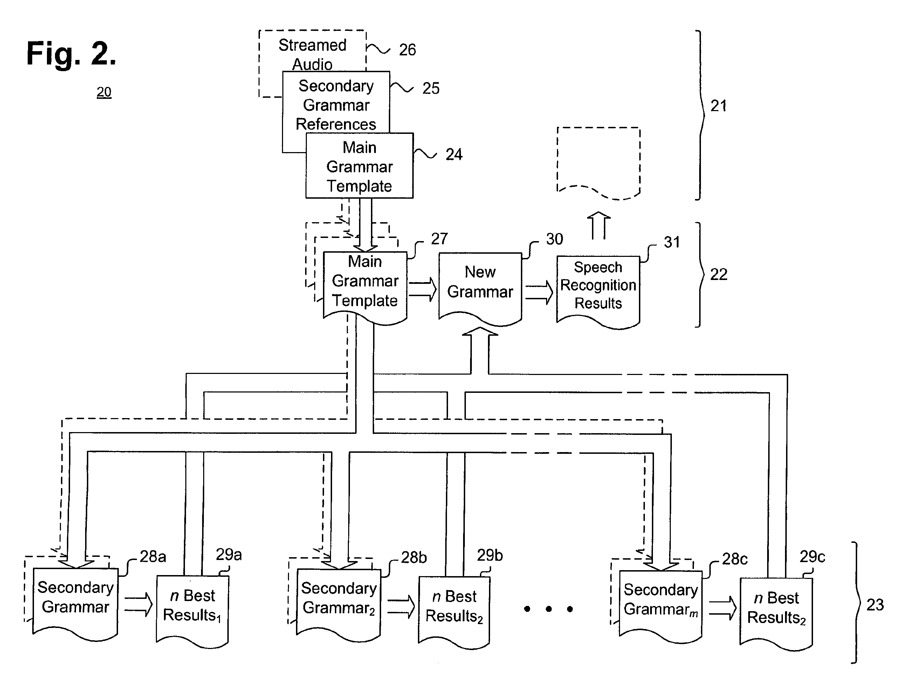

Speech recognition is performed through message exchange and streamed audio data communicated via the network infrastructure 17. FIGURE 2 is a data flow diagram showing grammar and search result distribution 20 in the system 10 of FIGURE 1. Speech recognition tasks and search results are communicated as messages between a message server level 21, main recognizer level 22, and secondary recognizer level 23.

For each speech utterance, the message server 11 sends a main grammar template 24 and a set of secondary grammar references 25 to the main recognizer 14. The main recognizer 14 stores the main grammar template 27, which specifies the structure for a new grammar 30 that will eventually be generated based on secondary search results provided by the secondary recognizers 15. The main recognizer 14 forwards the secondary grammar references 25 to each of the secondary recognizers 15, which use their respective secondary grammar reference 25 to identify a secondary grammar 28a-c for use in secondary speech recognition. In one embodiment, each secondary grammar 28a-c is a non-overlapping section of a main grammar, and the message server 11 assigns each section to the secondary recognizers 15 to balance work load and minimize grammar search latency times.

Speech recognition is performed on streamed audio data 26, which is received from the telephony interface 12 by way of the message server 11. The streamed audio data 26 is forwarded to and stored by the main recognizer 14 and by each of the secondary recognizers 15. The secondary recognizers 15 each perform speech recognition on the streamed audio data 26 against their respective secondary grammars 28a-c to generate a set of raw secondary search results. Each secondary speech recognizer 15 then applies a form of the *n*-best algorithm by selecting the *n* most likely search results from each set of raw secondary search results, which are then sent to the main recognizer 14 as secondary search results 29a-c. The main recognizer 14 uses the secondary search results 29a-c to form the new grammar 30. Other forms of applicative search result selection algorithms are possible. Speech recognition can be performed by each secondary recognizer 15 using a speech recognition engine, such as the OpenSpeech Recognizer speech engine, licensed by Nuance Communications, Inc., Burlington, MA. Other speech recognition engines and approaches are possible.

The main recognizer 14 constructs a new grammar 30 based on the stored main grammar template 27 using the secondary search results 29a-c as a new "vocabulary." As the secondary search results 29a-c generated by each secondary recognizer 15 differ based on the non-overlapping secondary grammars 28a-c used, the main grammar 14 compensates for probabilistic ties or close search results by using the secondary search results 29a-c, which each include the *n* most likely secondary search results identified by each secondary recognizer 15, to form the new grammar 30. The main recognizer 14 then performs speech recognition on the stored streamed audio data 26 against the new grammar 30 to generate a set of speech recognition results 31, which are sent to the message server 11. Speech recognition can be performed by the main recognizer 14 using a speech recognition engine, such as the OpenSpeech Recognizer speech engine, described above. Other speech recognition engines and approaches are possible.

Control over distributed speech recognition is mainly provided through the message server 11, which sends the main grammar template 24 and secondary grammar references 25 to initiate speech recognition for each speech utterance. The main recognizer 14 and secondary recognizers 15 then operate in concert to perform the distributed speech recognition. FIGURES 3 and 4 are flow diagrams respectively showing a method for performing distributed speech recognition using a main recognizer 14 and a secondary recognizer 15, in accordance with one embodiment.

Referring first to FIGURE 3, the main recognizer 14 initiates a new main speech recognition session upon receiving and saving a main grammar template 27 from the message server 11 for each speech utterance (block 41). The main recognizer 14 also receives secondary grammar references 25 from the message server 11, which are forwarded to each of the secondary recognizers 15 (block 42). To avoid incurring latency delays, the main recognizer 14 simultaneously receives streamed audio data 26 from the message server 11, while also respectively storing and forwarding the streamed audio data 26 to the secondary recognizers 15 (blocks 44 and 45). Following secondary speech recognition, the main recognizer 14 receives secondary search results 29a-c from each of the secondary recognizers 15 (block 46), from which the main recognizer 14 constructs a new grammar 30 based on the stored main grammar template 27 (block 47). The main recognizer 14 then performs speech recognition on the stored streamed audio data 26 against the new grammar 30 (block 49) and sends the resulting set of speech recognition results 31 to the message server 11 (block 50). Main speech recognition continues until the message server 11 closes the call session (block 51).

Referring next to FIGURE 4, each secondary recognizer 15 initiates a new secondary speech recognition session upon receiving the secondary grammar references 25 from the message server 11 by way of the main recognizer 14 (block 61). The secondary recognizer 15 looks up the appropriate non-overlapping secondary grammar 28a-c using the secondary grammar reference 25 assigned by the main server 11 (block 62). In one embodiment, each secondary grammar 28a-c is a non-overlapping section of a main grammar. To avoid incurring latency delays, each secondary recognizer 15 simultaneously receives the streamed audio data 26 (block 63), while performing speech recognition on the streamed audio data against their respective secondary grammar 28a-c and sending the *n* best secondary search results 29a-c to the main recognizer 14 (blocks 64 and 65). Secondary speech recognition continues until the message server 11 closes the call session (block 66).

In a further embodiment, additional levels or tiers of tertiary recognizers, quaternary recognizers, and so forth, can be implemented by expanding on the operations performed by the main recognizer 14 and secondary recognizers 15. For example, secondary grammar templates can be sent to the secondary recognizers 15 instead of secondary grammar references, and tertiary grammar references can be sent to tertiary recognizers, which perform tertiary speech recognition and send tertiary search results to the secondary recognizers 15. The secondary recognizers 15 would then construct new secondary grammars using the tertiary search results based on the secondary grammar templates, against which speech recognition would be performed. Other arrangements and assignments of new grammars and non-overlapping grammars are possible.

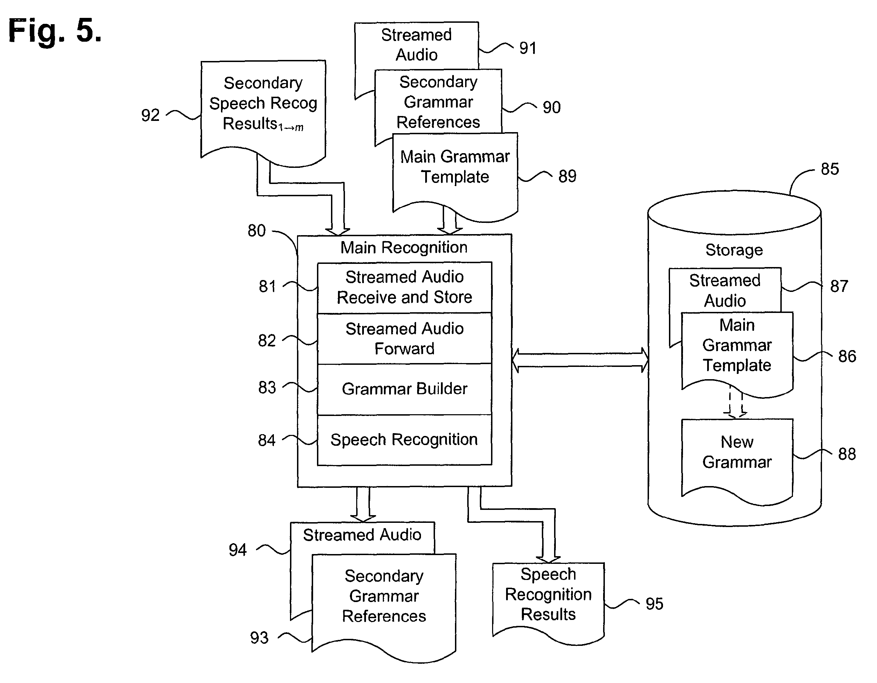

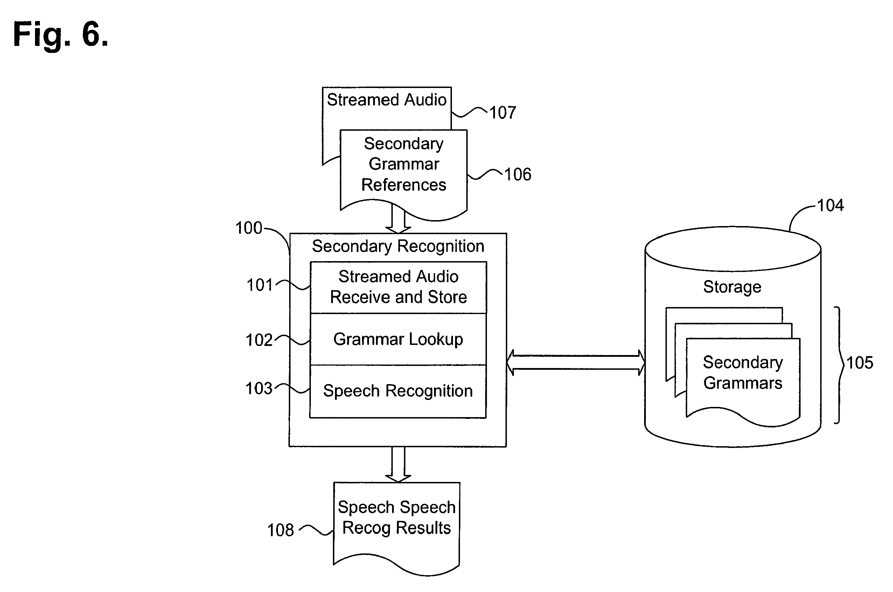

In one embodiment, the message server 11, main recognizer 14, and each of the secondary recognizers 15 are implemented on separate computing platforms to minimize latency delays incurred due to, for instance, communications, memory access, and hard disk data retrieval. FIGURES 5 and 6 are functional block diagrams respectively showing a main recognizer 80 and a secondary recognizer 100 for use in the system of FIGURE 1. In a further embodiment, the foregoing components can be combined on the same physical computing platform, but defined functionally as separate components, or can be provided in various arrangements of distributed processing system organizations.

Referring to FIGURE 5, the main recognizer 80 includes a storage device 85 and modules for streamed audio data receipt and storage 81, streamed audio data forwarding 82, grammar building 83, and speech recognition 84. The module for streamed audio data receipt and storage 85 receives streamed audio data 91 from the message server 11, which is simultaneously stored as streamed audio data 87 in the storage device 85. The module for streamed audio data forwarding 82 also simultaneously sends the streamed audio data 94 to each of the secondary recognizers 15. The grammar builder 83 receives the main grammar template 89 and secondary grammar references 90 from the main server 11 and stores the main grammar template 86 in the storage device 85. A grammar builder 83 forwards the secondary grammar references 93 to the secondary recognizers 15 and builds a new grammar 88 based on the main grammar template 86 using secondary speech recognition results 92 received from the secondary recognizers 15. Finally, the speech recognizer 84 performs speech recognition on the stored streamed audio data 87 against the new grammar 88 to generate a set of speech recognition results 95, which are sent to the message server 11. Other main recognizer components and functionality are possible.

Referring next to FIGURE 6, each secondary recognizer 11 includes a storage device 104 and modules for streamed data audio receipt 101, grammar lookup 102, and speech recognition 103. The module for streamed audio data receipt 101 receives streamed audio data 107 from the message server 11 by way of the main recognizer 14. The module for grammar lookup 102 looks up the secondary grammar 105 that was assigned by the message server 11 using the secondary grammar reference 106. The secondary grammar 105 is stored in the storage device 104. The speech recognizer 103 performs speech recognition on the streamed audio data 107 against the secondary grammar 105 to generate secondary speech recognition results 108, which are sent to the main recognizer 14 to the use in building a new grammar. Other secondary recognizer components and functionality are possible.

While the invention has been particularly shown and described as referenced to the embodiments thereof, those skilled in the art will understand that the foregoing and other changes in form and detail may be made therein without departing from the scope of the invention. The scope of invention is defined by the appended claims.

## Claims

1. A system (10) for performing distributed speech recognition, comprising:
a set of speech recognizers (15) to identify parts of speech in electronically-stored spoken data (26) against a plurality of stored speech grammars (28a-c) to provide one set of raw speech recognition results for each of the stored speech grammars (28a-c), wherein a limited number of each set of raw speech recognition results are designated as selected speech recognition results (29a-c); and
a combined speech recognizer (14) to assemble the selected speech recognition results (29a-c) into a combined stored speech grammar (30) based on a stored main grammar template (27) ; and to identify the same parts of speech of the spoken data (26) against the combined stored speech grammar (30) to provide net speech recognition results (31).

2. A system (10) according to Claim 1, wherein each of the stored speech grammars (28a-c) are specified as a non-overlapping section of a master stored speech grammar (24).

3. A system (10) according to Claim 1, wherein each of the stored speech grammars (28a-c) are specified as independent grammars.

4. A system (10) according to Claim 1, further comprising:
a root speech recognition tier (22) structured to perform the provisioning of the combined speech recognition results; and
one or more additional speech recognition tiers (23) structured to perform the provisioning of each of the raw speech recognition results.

5. A system (10) according to Claim 4, further comprising:
a load balancer (14) to balance the provisioning of the raw speech recognition results over the additional speech recognition tiers (23).

6. A system (10) according to Claim 1, further comprising:
a results selector (14) to select at least one of the limited number of each raw speech recognition results set and the net speech recognition results (31) by applying an *n*-best selection algorithm.

7. A system (10) according to Claim 1, wherein the provisioning of each of the raw speech recognition results and of the combined speech recognition results are distributed over a plurality of processors.

8. A system (10) according to Claim 1, wherein the electronically-stored spoken data (26) comprises streamed audio data (91).

9. A system (10) according to Claim 1, further comprising:
a customer call center to receive the streamed audio data (91) as each of a plurality of calls, wherein each call is processed by evaluating the net speech recognition results (31).

10. A method (40, 60) for performing distributed speech recognition, comprising:
identifying parts of speech in electronically-stored spoken data (26) against a plurality of stored speech grammars (28a-c) to provide one set of raw speech recognition results for each of the stored speech grammars (28a-c);
designating a limited number of each set of raw speech recognition results as selected speech recognition results (29a-c);
assembling the selected speech recognition results (29a-c) into a combined stored speech grammar (30) based on a stored main grammar template (27) , and
identifying the same parts of speech of the spoken data (26) against the combined stored speech grammar (30) to provide net speech recognition results (31).

11. A method (40, 60) according to Claim 10, further comprising:
specifying each of the stored speech grammars (28a-c) as a non-overlapping section of a master stored speech grammar (24).

12. A method (40, 60) according to Claim 10, further comprising:
specifying each of the stored speech grammars (28a-c) as independent grammars.

13. A method (40, 60) according to Claim 10, further comprising:
structuring the provisioning of the combined speech recognition results as a root speech recognition tier (22) and of each of the raw speech recognition results into one or more additional speech recognition tiers (23).

14. A method (40, 60) according to Claim 13, further comprising:
balancing the provisioning of the raw speech recognition results over the additional speech recognition tiers (23).

15. A method (40, 60) according to Claim 10, further comprising:
selecting at least one of the limited number of each raw speech recognition results set and the net speech recognition results (31) by applying an *n*-best selection algorithm.

16. A method (40, 60) according to Claim 10, further comprising:
distributing the provisioning of each of the raw speech recognition results and of the combined speech recognition results over a plurality of processors.

17. A method (40, 60) according to Claim 10, wherein the electronically-stored spoken data (26) comprises streamed audio data (91).

18. A method (40, 60) according to Claim 10, further comprising:
receiving the streamed audio data (91) as each of a plurality of calls incoming to a customer call center; and
processing each call by evaluating the net speech recognition results (31).

19. A computer-readable storage medium holding code adapted to perform the method (40, 60) according to Claim 10.

## Patentansprüche

1. System (10) zum Ausführen einer gesplitteten Spracherkennung, aufweisend:
einen Satz Spracherkennungseinrichtungen (15) zur Identifizierung von Bestandteilen einer Sprachfolge in elektronisch gespeicherten, gesprochenen Daten (26) gegenüber einer Mehrzahl gespeicherter Sprach-Grammatikeinträgen (28a-c), um eine Reihe von Roh-Spracherkennungs-Ergebnissen für jeden der gespeicherten Sprach-Grammatikeinträge (28a-c) vorzusehen, wobei eine begrenzte Anzahl einer jeden Reihe von Roh-Spracherkennungs-Ergebnissen als ausgewählte Spracherkennungs-Ergebnisse (29a-c) bestimmt wird; und
eine kombinierte Spracherkennungseinrichtung (14), um die ausgewählten Spracherkennungs-Ergebnisse (29a-c) in einer kombinierten, gespeicherten Sprach-Grammatik (30) basierend auf einer gespeicherten Hauptgrammatik-Vorlage (27) zusammenzutragen; und um dieselben Bestandteile der Sprachfolge der gesprochenen Daten (26) gegenüber der kombinierten, gespeicherten Sprach-Grammatik (30) zu identifizieren, um reine Spracherkennungs-Ergebnisse (31) zu erhalten.

2. System (10) nach Anspruch 1, wobei jeder der gespeicherten Sprach-Grammatikeinträge (28a-c) als eine sich nicht überlappende Sektion einer gespeicherten Master-Sprachgrammatik (24) spezifisiert ist.

3. System (10) nach Anspruch 1, wobei jeder der gespeicherten Sprach-Grammatikeinträge (28a-c) als unabhängige Grammatik spezifiziert sind.

4. System (10) nach Anspruch 1, ferner aufweisend:
eine Grundebene (22) der Spracherkennung, die so aufgebaut ist, dass die Vorsehung der kombinierten Spracherkennungs-Ergebnisse ausgeführt wird; sowie
eine oder mehrere zusätzliche Spracherkennungs-Ebenen (23), die so aufgebaut sind, dass die Vorsehung eines jeden der Roh-Spracherkennungs-ergebnisse ausgeführt wird.

5. System (10) nach Anspruch 4, ferner aufweisend:
eine Last-Ausgleichseinrichtung (14) zum Splitten der Vorsehung der Roh-Spracherkennungs-Ergebnisse über die zusätzlichen Spracherkennungs-Ebenen (23).

6. System (10) nach Anspruch 1, ferner aufweisend:
eine Ergebnis-Auswahleinrichtung (14), um zumindest eine Reihe aus der begrenzten Anzahl der jeweiligen Roh-Spracherkennungs-Ergebnis-Reihen sowie ein Ergebnis aus den reinen Spracherkennungs-Ergebnissen (31) zu wählen, indem ein *n*-best-Auswahl-Algorithmus angewendet wird.

7. System (10) nach Anspruch 1, wobei die Vorsehung eines jeden der Roh-Spracherkennungs-Ergebnisse und der kombinierten Spracherkennungs-Ergebnisse über eine Mehrzahl an Prozessoren verteilt ist.

8. System (10) nach Anspruch 1, wobei die elektronisch gespeicherten, gesprochenen Daten (26) gestreamte Audiodaten (91) umfassen.

9. System (10) nach Anspruch 1, ferner aufweisend:
ein Kunden-Call-Center zur jeweiligen Entgegennahme der gestreamten Audiodaten (91) aus einer Mehrzahl von Anrufen, wobei jeder Anruf durch Evaluierung der reinen Spracherkennungs-Ergebnisse (31) bearbeitet wird.

10. Verfahren (40, 60) zum Ausführen einer gesplitteten Spracherkennung, aufweisend:
eine Identifizierung von Bestandteilen einer Sprachfolge in elektronisch gespeicherten, gesprochenen Daten (26) gegenüber einer Mehrzahl an gespeicherten Sprach-Grammatikeinträgen (28a-c), um eine Reihe von Roh-Spracherkennungs-Ergebnissen für jeden der gespeicherten Sprach-Grammatikeinträge (28a-c) bereitzustellen;
eine Bestimmung einer begrenzten Anzahl einer jeden Reihe der Roh-Spracherkennungs-Ergebnisse als gewählte Spracherkennungs-Ergebnisse (29a-c);
ein Zusammentragen der ausgewählten Spracherkennungs-Ergebnisse (29a-c) in einer kombinierten, gespeicherten Sprachgrammatik (30) basierend auf einer gespeicherten Hauptgrammatik-Vorlage (27); und
ein Identifizieren derselben Bestandteile der Sprache der gesprochenen Daten (26) gegenüber der kombinierten, gespeicherten Sprachgrammatik (30), um reine Spracherkennungs-Ergebnisse (31) vorzusehen.

11. Verfahren (40, 60) nach Anspruch 10, ferner aufweisend:
ein Spezifieren eines jeden der gespeicherten Sprach-Grammatikeinträge (28a-c) als ein nicht überlappende Sektion einer gespeicherten Master-Sprachgrammatik (24).

12. Verfahren (40, 60) nach Anspruch 10, ferner aufweisend:
ein Spezifizieren eines jeden der gespeicherten Sprach-Grammatikeinträge (28a-c) als unabhängige Grammatik.

13. Verfahren (40, 60) nach Anspruch 10, ferner aufweisend:
ein Strukturieren der Vorsehung der kombinierten Spracherkennungs-Ergebnisse als eine Grundebene (22) der Spracherkennung und eines jeden der Roh-Spracherkennungs-Ergebnisse in eine oder mehrere zusätzliche Spracherkennungsebenen (23).

14. Verfahren (40, 60) nach Anspruch 13, ferner aufweisend:
ein Splitten der Vorsehung der Roh-Spracherkennungs-Ergebnisse gegenüber den zusätzlichen Spracherkennungs-Ebenen (23).

15. Verfahren (40, 60) nach Anspruch 10, ferner aufweisend:
ein Auswählen mindestens einer Reihe aus der begrenzten Anzahl einer jeden Roh-Spracherkennungs-Ergebnisreihe und eines Ergebnisses der reinen Spracherkennungs-Ergebnisse (31) durch Anwendung eines *n*-best-Auswahl-Algorithmus.

16. Verfahren (40, 60) nach Anspruch 10, ferner aufweisend:
ein Splitten der Vorsehung eines jeden Ergebnisses der Roh-Spracherkennungs-Ergebnisse und der kombinierten Spracherkennungs-Ergebnisse auf eine Mehrzahl von Prozessoren.

17. Verfahren (40, 60) nach Anspruch 10, wobei die elektronisch gespeicherten, gesprochenen Daten (26) gestreamte Audiodaten (91) umfassen.

18. Verfahren (40, 60) nach Anspruch 10, ferner aufweisend:
eine Entgegennahme der gestreamten Audiodaten (91) jeweils aus der Mehrzahl von Anrufen, die bei einem Kunden-Call-Center eingehen; und
ein Bearbeiten eines jeden Anrufs durch Evaluierung der reinen Spracherkennungs-Ergebnisse (31).

19. Computerlesbares Speichermedium, auf dem ein Programm gehalten ist, dass dazu bestimmt ist, dass Verfahren (40, 60) gemäß Anspruch 10 auszuführen.

## Revendications

1. Système (10) pour l'exécution d'une reconnaissance vocale distribuée, comprenant :
un ensemble de modules de reconnaissance vocale (15) destiné à identifier des parties de discours dans des données parlées stockées électroniquement (26) en les confrontant à une pluralité de grammaires vocales stockées (28a - c) pour fournir un ensemble de résultats bruts de reconnaissance vocale pour chacune des grammaires vocales stockées (28a-c), un nombre limité de chaque ensemble de résultats bruts de reconnaissance vocale étant désigné en tant que résultats de reconnaissance vocale sélectionnés (29a-c) ; et
un module de reconnaissance vocale combinée (14) destiné à assembler les résultats de reconnaissance vocale sélectionnés (29a-c) en une grammaire vocale stockée combinée (30) selon un modèle de grammaire principal stocké (27) ; et à identifier les mêmes parties de discours des données parlées (26) en les confrontant à la grammaire vocale stockée combinée (30) pour fournir des résultats de reconnaissance vocale de réseau (31).

2. Système (10) selon la revendication 1, dans lequel chacune des grammaires vocales stockées (28a-c) est spécifiée comme une section sans chevauchement d'une grammaire vocale stockée maîtresse (24).

3. Système (10) selon la revendication 1, dans lequel chacune des grammaires vocales stockées (28a-c) est spécifiée comme une grammaire indépendante.

4. Système (10) selon la revendication 1, comprenant en outre :
une architecture de reconnaissance vocale racine (22) structurée de façon à permettre la fourniture des résultats de reconnaissance vocale combinés ; et
une ou plusieurs architectures de reconnaissance vocale additionnelles (23) structurées de façon à permettre la fourniture de chacun des résultats bruts de reconnaissance vocale.

5. Système (10) selon la revendication 4, comprenant en outre :
un équilibreur de charge (14) pour équilibrer la fourniture des résultats bruts de reconnaissance vocale sur les architectures de reconnaissance vocale additionnelles (23).

6. Système (10) selon la revendication 1, comprenant en outre :
un sélecteur de résultat (14) pour sélectionner au moins l'un du nombre limité de chaque ensemble de résultats bruts de reconnaissance vocale et des résultats de reconnaissance vocale de réseau (31) par application d'un algorithme de sélection aux n meilleurs.

7. Système (10) selon la revendication 1, dans lequel la fourniture de chacun des résultats bruts de reconnaissance vocale et des résultats de reconnaissance vocale combinés est distribuée sur une pluralité de processeurs.

8. Système (10) selon la revendication 1, dans lequel les données parlées stockées électroniquement (26) comprennent des données audio en flux continu (91).

9. Système (10) selon la revendication 1, comprenant en outre :
un centre d'appel clients destiné à recevoir les données audio en flux continu (91) comme représentant chacun d'une pluralité d'appels, chaque appel étant traité par évaluation des résultats de reconnaissance vocale de réseau (31).

10. Procédé (40, 60) pour l'exécution d'une reconnaissance vocale distribuée, comprenant les étapes consistant à :
identifier des parties de discours dans des données parlées stockées électroniquement (26) en les confrontant à une pluralité de grammaires vocales stockées (28a - c) pour fournir un ensemble de résultats bruts de reconnaissance vocale pour chacune des grammaires vocales stockées (28a-c) ;
désigner un nombre limité de chaque ensemble de résultats bruts de reconnaissance vocale en tant que résultats de reconnaissance vocale sélectionnés (29a-c) ;
assembler les résultats de reconnaissance vocale sélectionnés (29a-c) en une grammaire vocale stockée combinée (30) selon un modèle de grammaire principal stocké (27) ; et
identifier les mêmes parties de discours des données parlées (26) en les confrontant à la grammaire vocale stockée combinée (30) pour fournir des résultats de reconnaissance vocale de réseau (31).

11. Procédé (40, 60) selon la revendication 10, comprenant en outre l'étape consistant à :
spécifier chacune des grammaires vocales stockées (28a-c) comme une section sans chevauchement d'une grammaire vocale stockée maîtresse (24).

12. Procédé (40, 60) selon la revendication 10, comprenant en outre l'étape consistant à :
spécifier chacune des grammaires vocales stockées (28a-c) comme une grammaire indépendante.

13. Procédé (40, 60) selon la revendication 10, comprenant en outre l'étape consistant à :
structurer la fourniture des résultats de reconnaissance vocale combinés sous la forme d'une architecture de reconnaissance vocale racine (22) et de chacun des résultats bruts de reconnaissance vocale en une ou plusieurs architectures de reconnaissance vocale additionnelles (23).

14. Procédé (40, 60) selon la revendication 13, comprenant en outre l'étape consistant à :
équilibrer la fourniture des résultats bruts de reconnaissance vocale sur les architectures de reconnaissance vocale additionnelles (23).

15. Procédé (40, 60) selon la revendication 10, comprenant en outre l'étape consistant à :
sélectionner au moins l'un du nombre limité de chaque ensemble de résultats bruts de reconnaissance vocale et des résultats de reconnaissance vocale de réseau (31) par application d'un algorithme de sélection aux n meilleurs.

16. Procédé (40, 60) selon la revendication 10, comprenant en outre l'étape consistant à :
distribuer la fourniture de chacun des résultats bruts de reconnaissance vocale et des résultats de reconnaissance vocale combinés sur une pluralité de processeurs.

17. Procédé (40, 60) selon la revendication 10, dans lequel les données parlées stockées électroniquement (26) comprennent des données audio en flux continu (91).

18. Procédé (40, 60) selon la revendication 10, comprenant en outre l'étape consistant à :
recevoir les données audio en flux continu (91) comme représentant chacun d'une pluralité d'appels arrivant à un centre d'appel clients ; et
traiter chaque appel par évaluation des résultats de reconnaissance vocale de réseau (31).

19. Support de stockage lisible par un ordinateur, contenant un code adapté pour l'exécution du procédé (40, 60) selon la revendication 10.
